# FASCICULE DE BREVET EUROPEEN

(11) **EP 2 910 470 B1**
(45) Date de publication et mention de la délivrance du brevet: **24.08.2016**
(21) Numéro de dépôt: 15151406.4
(22) Date de dépôt: 16.01.2015
(51) Int. Cl.: B64C 27/32, B64C 27/57, B64C 27/605

(54) **Rotor pour giravion comportant un mécanisme de butée en battement, et giravion**
Rotor für Drehflügler, der einen Anschlagnockenmechanismus umfasst, sowie Drehflügler
A rotorcraft rotor including a flapping abutment mechanism, and a rotorcraft

(30) Priorité: 21.02.2014 FR 1400462
(43) Date de publication de la demande: 26.08.2015
(73) Titulaire: Airbus Helicopters, 13725 Marignane Cedex (FR)
(72) Inventeur: Massal, Fabien, 13250 SAINT CHAMAS (FR); Eberhard, Alain, 13880 VELAUX (FR)
(74) Mandataire: GPI & Associés

(56) Documents cités:
- FR-A1- 2 551 723
- FR-A1- 2 760 425
- US-A- 2 719 593
- US-A1- 2011 243 734

## Description

La présente invention concerne un rotor de giravion, et un giravion muni d'un tel rotor.

L'invention se situe donc dans le domaine technique des rotors de giravion. Plus spécifiquement, l'invention se situe dans le domaine des butées équipant de tels rotors pour limiter le mouvement en battement des éléments sustentateurs portés par le moyeu de ce rotor.

En effet, un giravion comporte usuellement au moins un rotor pour assurer au moins en partie la sustentation voire la propulsion de ce giravion.

Un rotor comprend un moyeu mis en rotation par un mât. Le moyeu porte alors au moins deux ensembles sustentateurs. Par suite, chaque ensemble sustentateur est muni d'une pale reliée au moyeu par au moins un organe de retenue et de mobilité. Chaque pale peut notamment comprendre un élément sustentateur fixé à un manchon ou encore un élément sustentateur muni d'un manchon intégré.

Par exemple, un organe de retenue et de mobilité inclut une articulation dénommée « butée sphérique ». Chaque butée sphérique peut avoir une armature fixée au moyeu et une armature fixée à un manchon, que ce manchon soit intégré ou non à un élément sustentateur.

Les pales sont donc des éléments allongés sensiblement plans qui sont portés par le moyeu transversalement. Le montage des pales sur le moyeu est procuré par des organes de montage individuels des pales sur le moyeu qui incluent les organes de retenue et de mobilité reliant les ensembles sustentateurs au moyeu.

Le moyeu peut être un moyeu à plateaux muni de deux plateaux solidaires d'un mât. Par exemple, une armature d'un organe de retenue et de mobilité est fixée aux plateaux par une broche.

Selon une autre réalisation, le moyeu peut comporter un unique plateau fixé au mât, ce plateau étant pourvu de bras radiaux comportant des ouvertures. Un organe de retenue et de mobilité est éventuellement positionné dans chaque ouverture, en étant solidarisé au plateau par une armature. Un manchon s'étend alors de part et d'autre du plateau en s'étendant de l'organe de retenue et de mobilité vers un élément sustentateur.

Les organes de montage équipent respectivement chacune des pales à leur emplanture pour autoriser leur manoeuvre par un opérateur. Le montage mobile des pales sur le moyeu permet par exemple à un pilote de giravion d'opérer en vol des variations collectives ou cycliques du pas des pales pour influer sur le comportement du giravion au regard de sa sustentation et/ou de sa propulsion.

La mobilité des pales sur le moyeu autorise leur déplacement en traînée, en pas et en battement vers le haut et vers le bas. Les notions de haut et de bas sont à considérer suivant l'orientation d'extension de l'axe de rotation du rotor. Lorsque le rotor est tournant à vitesse nominale, les pales sont spontanément entraînées vers le haut sous l'effet de la force centrifuge et de la portance. Lorsque le rotor est à l'arrêt, les pales ne subissent aucune force autre que la pesanteur et sont donc entraînées naturellement vers le bas sous l'effet de leur masse.

Le rotor est donc couramment équipé d'un mécanisme de butées limitant le trajet des pales notamment en battement sous l'effet d'efforts extérieurs au giravion.

Selon une réalisation, le mécanisme de butées peut comprendre pour chacune des pales un organe de butée inférieur et un organe de butée supérieur qui forment des obstacles au trajet en battement individuel des pales respectivement vers le bas et vers le haut. Le mécanisme de butées inclut des pistes de butée inférieure et supérieure agencées sur un organe de retenue et de mobilité. Par exemple, une armature d'une butée sphérique porte un patin de butée présentant une piste de butée.

En cas de mouvement en battement indu d'une pale, une piste de butée vient en contact d'un organe de butée ce qui limite de fait le mouvement en battement de cette pale.

Le mécanisme de butées a notamment pour fonction de limiter le mouvement en battement des pales lors du démarrage du rotor, et plus particulièrement en présence de vent. Ce mécanisme de butées peut aussi limiter le mouvement en battement des pales durant une opération de repliage de ces pales. En présence notamment de butées sphériques articulant une pale au moyeu, le mécanisme de butées tend à préserver cette butée sphérique au sol en évitant qu'un mouvement en battement d'une pale en l'absence de force centrifuge induise un décollement des éléments constitutifs de la butée sphérique.

Lorsque le rotor est en rotation, les organes de butée supérieurs ne doivent pas faire obstacle à la mobilité des pales vers le haut. Le mécanisme de butées peut alors prévoir des moyens d'escamotage des organes de butée supérieurs lorsque le rotor est mis en service.

Les organes de butée supérieurs sont alors montés mobiles sur le moyeu entre deux positions. Une première position est une position d'engagement des organes de butée supérieurs en vis-à-vis des pistes de butée correspondantes pour limiter en situation d'arrêt du rotor la mobilité des pales en battement entre les organes de butée inférieurs et les organes de butée supérieurs qui leurs sont affectés. Une deuxième position est une position de désengagement des organes de butée supérieurs, qui autorise en vol une libre mobilité des pales en battement vers le haut.

En résumé, un mécanisme de butée supérieur inclut usuellement un organe de butée par ensemble sustentateur, une piste de butée portée par un ensemble sustentateur et par exemple son organe de retenue et de mobilité, et un moyen d'escamotage pouvant positionner un organe de butée en vis-à-vis d'une piste de butée si nécessaire.

De plus, le mécanisme de butées comprend un anneau de butée basse commun à toutes les pales. Cet anneau de butée basse est mobile dans une gorge.

En vol, une seule pale à la fois peut se déplacer vers le bas, et pousse l'anneau selon une direction opposée. L'anneau n'entrave donc pas le battement des éléments sustentateurs.

Par contre au sol, à faible régime de rotation du rotor et à l'arrêt, les ensembles sustentateurs viennent simultanément en contact avec l'anneau, ce qui induit leur immobilisation mutuelle.

Un mécanisme de butées d'une pale comprend donc un anneau de butée basse commun à tous les éléments sustentateurs, et une butée haute escamotable rétractable par élément sustentateur. Un tel anneau est parfois dénommé « anneau réciproque ».

Ces deux systèmes de butée sont indépendants et tendent à multiplier les pièces mécaniques dans un espace par nature restreint.

Par ailleurs, l'anneau de butée basse peut présenter une masse non négligeable sur un aéronef de fort tonnage, et générer en vol un balourd à prendre en considération.

Le document US 2.719.593 présente un aéronef muni d'une pluralité de pales articulées à une tête de rotor par notamment une articulation de traînée dénommée « drag hinge » en langue anglaise pour autoriser un mouvement de traînée de la pale, une articulation de battement dénommée « flapping link » en langue anglaise pour autoriser un mouvement de battement de la pale, et une articulation de pas pour autoriser un mouvement de battement de la pale. L'articulation de battement est interposée entre l'articulation de pas et l'articulation de traînée.

Pour chaque pale, l'aéronef comprend un mécanisme de retenue en battement pour maintenir la pale dans une position donnée. Ce mécanisme comprend un crochet relié par des bras verticaux à l'articulation de battement et solidaire en battement de la pale. Le crochet est solidaire d'une masse pour basculer sous l'effet d'une force centrifuge autour d'un axe de rotation horizontal articulé aux bras verticaux.

Ce crochet comprend une mâchoire en forme U délimitant une gorge, cette forme de U étant obtenue à l'aide d'une paroi de fond arquée et de deux parois verticales symétriques. Cette mâchoire est alors engagée autour d'un pion de l'articulation de traînée lorsque le rotor est à l'arrêt pour empêcher un battement vers le haut de la pale, et désengagé de ce pion lorsque le rotor est mis en rotation.

Le pion est alors solidaire de la pale durant son mouvement en traînée, le crochet étant solidaire de la pale durant ses mouvements en traînée et en battement.

Ce document US 2.719.593 ne fournit alors pas un enseignement relatif à un ensemble sustentateur relié à un moyeu par une butée sphérique représentant une articulation selon trois axes.

Une telle butée sphérique présente la particularité de risquer un décollement de ces éléments constitutifs suite à un mouvement de battement et en l'absence d'une force centrifuge élevée.

On connaît aussi les documents FR 2.636.914, US 4.368.006, FR 2.434.079, FR 2.297.166, US 3.533.713, US 2.928.478, US 2.614.640, US 2.481.747, US 2.151.215, US 4.549.852, FR 2.551.723 et FR 2.523.071.

Le document FR 2636914 présente un mécanisme muni d'un anneau réciproque de butée basse commun à tous les éléments sustentateurs et une butée haute escamotable rétractable par élément sustentateur. Une butée haute comprend un levier muni de deux bras, un premier bras constituant un doigt de butée et un deuxième bras portant une masselotte.

Le document FR 2.434.079 présente un mécanisme muni d'un anneau réciproque de butée basse commun à tous les éléments sustentateurs et une butée haute par élément sustentateur qui comprend un levier coudé.

Le document US 4.368.006 suggère l'emploi d'un levier muni d'une surface arrondie.

Le document FR 2.297.166 présente un élément sustentateur solidaire d'une fourche fixée par un palier élastomérique et sphérique à un moyeu et par un arbre court à un palier de centrage élastomère.

Un premier élément d'arrêt est libre en rotation autour de l'arbre court, et comporte une saillie locale munie d'une première surface d'aboutement plate. Une deuxième élément d'arrêt est supporté par le moyeu et comporte une saillie locale munie d'une deuxième surface d'aboutement plate apte à bloquer un battement vers le bas de l'élément sustentateur en vol par interférence avec la première surface d'aboutement plate.

Un arrêt de chute statique est prévu pour limiter le battement de l'élément sustentateur à l'arrêt ou à faible vitesse de rotation du rotor. Cet arrêt de chute statique est muni d'un élément de contact qui est relié à un ressort et apte à être accolé à la première surface d'aboutement plate.

Le document US 2.614.640 présente un élément sustentateur relié à un moyeu par une articulation de traînée ainsi que par une articulation de battement et une articulation de pas à l'instar du document US 2.719.593.

Un mécanisme de butée comprend un volet mobile en rotation par rapport à l'articulation de traînée. Ce volet vise à limiter le battement vers le bas de l'élément sustentateur par interférence avec une surface de l'articulation de battement.

Ce volet peut être déplacé en rotation par un levier muni d'une masselotte.

Le document US 4.549.852 décrit un levier mobile en rotation par rapport à un moyeu. Ce levier est apte à déplacer un piston pour bloquer une piste de battement haute ou une piste de battement basse d'un palier élastomérique.

Le document FR 2.551.723 divulgue les caractéristiques du préambule de la revendication 1 et décrit un mécanisme de butées muni d'un dispositif de butée basse et d'un dispositif de butée haute distincts par élément sustentateur.

Chaque dispositif de butée basse comprend un organe mobile muni d'un galet bombé présentant une surface de butée convexe et d'une masselotte agencée à l'extrémité d'un bras. Cet organe mobile est monté pivotant autour d'une broche de retenue d'un ensemble sustentateur à un moyeu.

Chaque dispositif de butée haute comprend une masselotte inférieure rappelée par un ressort, et un becquet.

Le document FR 2.523.071 décrit un moyen de butée supporté par un moyeu. Ce moyen de butée est mobile en rotation par rapport à ce moyeu sous l'effet de la force centrifuge et en opposition à l'action d'un moyen élastique. Ce moyen de butée est pourvu de deux organes qui basculent autour d'axes sensiblement parallèles.

Le document US 3.533.713 présente un rotor muni d'un moyeu mobile par rapport à un mât du type dénommé moyeu « gimbal » en langue anglaise. Le rotor est de plus pourvu d'un mécanisme pour bloquer ce moyeu dans une position par rapport au mât. Ce document est donc éloigné du domaine technique des butées de pales.

De même, les documents US 2.928.478, US 2.481.747 et US 2.151.215 présentent des dispositifs pour bloquer l'inclinaison d'un moyeu pouvant pivoter par rapport à un mât rotor.

On connaît aussi les documents US 2011/243734 et Fr 2760425.

Le but de la présente invention est de proposer un rotor muni d'un mécanisme pour limiter le trajet en battement des pales d'un rotor principal d'un giravion.

Selon l'invention, un rotor de giravion est muni une pluralité d'ensembles sustentateurs et d'un système d'entraînement pour entraîner en rotation les ensembles sustentateurs autour d'un axe de rotation. Le système d'entraînement inclut un moyeu mobile uniquement en rotation autour dudit axe de rotation, chaque ensemble sustentateur ayant un organe de retenue et de mobilité relié au moyeu pour articuler l'ensemble sustentateur au moyeu autour de trois directions de rotation. Le rotor est pourvu d'un mécanisme de butée par ensemble sustentateur pour limiter le mouvement en battement de l'ensemble sustentateur vers le haut et vers le bas dans des conditions prédéterminées.

Le rotor de giravion n'est donc pas muni d'un moyeu « gimbal » mais d'un moyeu fixe par rapport à un mât rotor. De plus, un ensemble sustentateur n'est pas muni d'une succession d'articulations, mais comporte un unique organe de retenue et de mobilité telle qu'une butée sphérique lamifiée.

Chaque mécanisme de butée d'un ensemble sustentateur comprend :
- une excroissance de butée solidaire de l'ensemble sustentateur, chaque excroissance de butée comprenant une extrémité de butée munie d'une face interne en regard du système d'entraînement et d'une face externe opposée à la face interne,
- au moins un levier pivotant autour d'un arbre de pivotement solidaire du système d'entraînement, chaque levier s'étendant longitudinalement d'une masselotte vers un crochet qui définit une gorge borgne apte à entourer longitudinalement ladite extrémité de butée dans une position d'engagement et à libérer cette extrémité de butée dans une position de désengagement obtenue sous l'effet de la force centrifuge, ledit crochet étant muni de deux parois en élévation s'élevant à partir d'une paroi de fond en formant une périphérie en forme de J qui délimite ladite gorge, une première paroi en élévation comprenant une zone d'appui supérieur pour bloquer ladite face interne suite à un battement vers le bas de l'ensemble sustentateur et une deuxième paroi en élévation comprenant une zone d'appui inférieur pour bloquer ladite face externe suite à un battement vers le haut de l'ensemble sustentateur, ladite zone d'appui supérieur étant présente dans un plan horizontal supérieur à l'aplomb d'un plan horizontal inférieur passant par la zone d'appui inférieur,
- un moyen de rappel agissant sur ledit levier pour tendre à le positionner dans la position d'engagement.

On entend par plan horizontal un plan sensiblement perpendiculaire à la pesanteur lorsque l'aéronef repose sur un sol plat.

Par suite, lorsque le rotor est à l'arrêt et lorsque les ensembles sustentateurs effectuent une rotation autour de l'axe de rotation à une vitesse inférieure à un seuil, chaque moyen de rappel exerce un effort sur au moins un levier pour le positionner dans une position d'engagement.

Un tel moyen de rappel peut être un ressort de traction s'étendant du système d'entraînement vers un levier, ou encore un ressort rotatif interposé entre le levier et l'arbre de pivotement correspondant par exemple.

Dans cette position, l'extrémité de butée d'un ensemble sustentateur est insérée dans la gorge d'au moins un crochet.

En cas d'un mouvement de battement vers le bas de l'ensemble sustentateur, à savoir vers le sol, la face interne de l'extrémité de butée bute contre la zone d'appui supérieur du crochet. Cette face interne peut alors tendre à induire une rotation du crochet selon un premier sens de rotation. Cependant l'architecture dissymétrique des zones d'appui induit qu'une telle rotation sera empêchée par une interférence de la zone d'appui inférieur avec la face externe.

De même, en cas d'un mouvement de battement vers le haut de l'ensemble sustentateur, la face externe de l'extrémité de butée bute contre la zone d'appui inférieur du crochet. Cette face externe peut alors tendre à induire une rotation du crochet selon un deuxième sens de rotation opposé au premier sens précédent. Cependant l'architecture dissymétrique des zones d'appui induit qu'une telle rotation sera empêchée par une interférence de la zone d'appui supérieur avec la face interne.

La géométrie spécifique des parois délimitant la gorge tend ainsi à éviter une rotation indue du crochet.

Lorsque les ensembles sustentateurs effectuent une rotation autour de l'axe de rotation à une vitesse supérieure au seuil précédemment cité, la force centrifuge exercée sur la masselotte induit le déplacement du levier vers une position de désengagement. Le levier effectue alors une rotation selon le deuxième sens. La forme en J de la périphérie de la gorge peut favoriser ce déplacement.

Dès lors, le crochet ne limite plus les mouvements en battement de l'ensemble sustentateur.

Par conséquent, chaque ensemble sustentateur est muni d'un unique mécanisme mettant en oeuvre un crochet pour limiter les mouvements en battement d'un ensemble sustentateur via une excroissance de cet ensemble sustentateur.

De plus, le levier n'est pas solidarisé à l'ensemble sustentateur. Cette caractéristique évite l'agencement d'une masse non négligeable sur un organe mobile.

Ce rotor peut de plus comporter une ou plusieurs des caractéristiques qui suivent.

Par exemple, le système d'entraînement comportant au moins des organes présents dans une liste incluant ledit moyeu ainsi qu'un mât rotor solidaire du moyeu et un élément d'un compas, au moins un levier est attaché à l'un des organes de cette liste.

Par ailleurs, l'arbre de pivotement peut s'étendre le long d'un axe de symétrie contenu dans un plan horizontal de référence situé au dessus de la zone d'appui inférieur et en dessous de la zone d'appui supérieur lorsque le levier est dans la position d'engagement.

Cette caractéristique favorise le maintien d'une extrémité de butée dans une gorge.

En outre, la face interne d'une excroissance de butée n'est éventuellement pas parallèle à la première paroi en élévation d'un crochet et ladite face externe n'est pas parallèle à la deuxième paroi en élévation dans la position d'engagement.

Cette caractéristique favorise aussi le maintien d'une extrémité de butée dans une gorge.

Par ailleurs, la première paroi en élévation d'un crochet n'est éventuellement pas parallèle à la deuxième paroi en élévation, la première paroi en élévation se rapprochant de la deuxième paroi en élévation en s'éloignant de la paroi de fond.

Cette caractéristique favorise aussi le maintien d'une extrémité de butée dans une gorge.

En outre, l'arbre de pivotement s'étendant le long d'un axe de symétrie contenu dans un plan horizontal de référence, ladite masselotte d'un crochet est décalée par rapport au plan horizontal de référence.

Cette caractéristique favorise le pivotement du levier sous l'effet de la force centrifuge.

Par ailleurs, au moins un mécanisme peut comporter un levier redondé soit deux leviers identiques agencés symétriquement de part et d'autre d'un plan d'extension de l'ensemble sustentateur, les deux leviers étant mobiles en rotation autour du même arbre de pivotement.

Cette variante vise à redonder le crochet d'un mécanisme par mesure de sécurité.

L'arbre de pivotement peut alors comporter une unique tige commune aux deux leviers ou encore une tige par levier.

Par ailleurs, au moins un mécanisme peut comporter un support portant l'arbre de pivotement, le support étant fixé au système d'entraînement.

Chaque levier d'un mécanisme de butée est alors relié au système d'entraînement par l'arbre de pivotement et le support.

En outre, le support peut être muni d'un tampon par levier pour limiter le pivotement du levier.

Par ailleurs, le support est muni d'une piste de butée en regard de la face interne pour représenter une butée basse franche active en vol bloquant la face interne suite à un battement vers le bas atteignant une amplitude maximale prédéterminée. La piste de butée est localisée longitudinalement entre la masselotte et la gorge du levier dans la position d'engagement.

Le mécanisme de butée peut alors aussi faire office de butée en vol pour limiter l'amplitude en battement de l'ensemble sustentateur à une amplitude maximale. Autrement dit, le crochet limite le battement d'un ensemble sustentateur vers le haut et vers le bas à une amplitude minimale lorsque le rotor effectue une rotation à une vitesse inférieure à un seuil. Par contre, la piste de butée du support limite le battement d'un ensemble sustentateur vers le bas uniquement à une amplitude maximale lorsque le rotor effectue une rotation à une vitesse supérieure à un seuil

En outre, l'extrémité de butée peut comporter une tranche s'étendant entre la face interne et la face externe et étant en regard de la paroi de fond dans la position d'engagement, ladite tranche étant arquée pour autoriser la modification du pas de l'élément sustentateur.

Outre un rotor, l'invention vise un giravion comportant un tel rotor.

L'invention et ses avantages apparaîtront avec plus de détails dans le cadre de la description qui suit avec des exemples donnés à titre illustratif en référence aux figures annexées qui représentant :
- la figure 1, une vue d'un rotor d'un giravion muni d'un levier d'un mécanisme de butée dans la position d'engagement,
- la figure 2, une vue d'un rotor d'un giravion muni d'un levier d'un mécanisme de butée dans la position de désengagement,
- la figure 3, une vue d'un levier,
- la figure 4, une vue d'une extrémité de butée arrondie
- la figure 5, une vue d'un mécanisme de butée ayant un levier redondé en position d'engagement,
- la figure 6, une vue d'un mécanisme de butée ayant un levier redondé en position de désengagement, et
- la figure 7 une vue d'une gorge d'un levier.

Les éléments présents dans plusieurs figures distinctes sont affectés d'une seule et même référence.

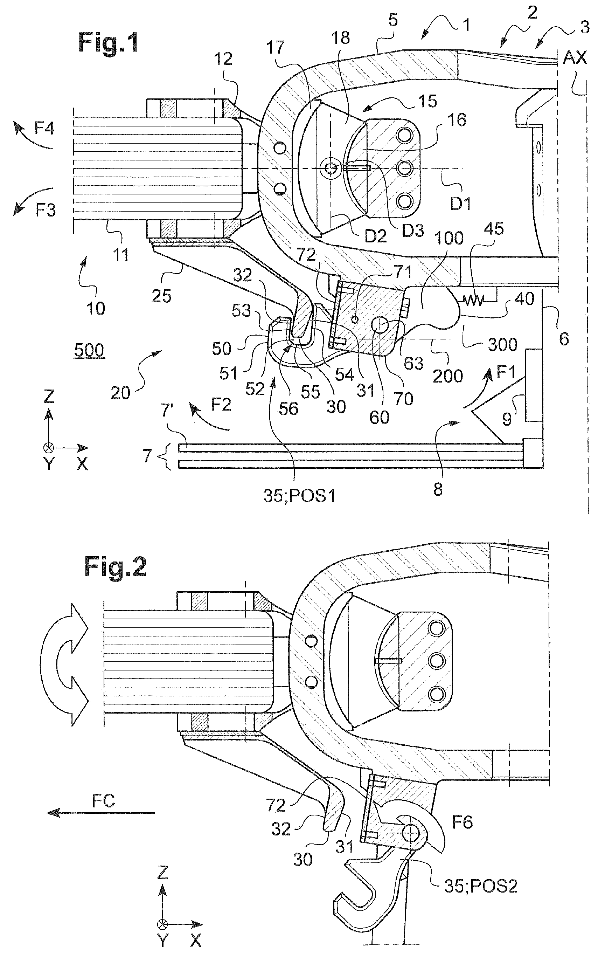

On note que trois directions X, Y et Z orthogonales les unes par rapport aux autres sont représentées sur la figure 1.

La première direction X est dite longitudinale.

La deuxième direction Y est dite transversale.

Enfin, la troisième direction Z est dite en élévation.

La figure 1 présente un giravion 1 muni d'un rotor 2. Le giravion 1 et le rotor 2 sont partiellement schématisés pour ne pas alourdir la figure 1. Le rotor 2 peut être un rotor de sustentation voire de propulsion du giravion.

Le rotor 2 est pourvu d'un système d'entraînement 3 pour contrôler et mettre en rotation une pluralité d'ensembles sustentateurs 10.

Ce système d'entraînement comprend un moyeu 5 solidaire d'un mât rotor 6 en rotation autour d'un axe de rotation AX. Le moyeu 5 possède au moins un plateau pour porter une pluralité d'ensembles sustentateurs 10. Le moyeu est donc uniquement mobile en rotation autour de l'axe de rotation. Ce moyeu n'est donc pas un moyeu articulé à un mât.

Ainsi, le moyeu peut être muni d'un plateau supérieur et d'un plateau inférieur délimitant en élévation un espace pouvant accueillir partiellement les ensembles sustentateurs. De manière alternative, le moyeu peut par exemple comprendre un plateau pourvu d'alvéoles.

Indépendamment de la réalisation du moyeu, chaque ensemble sustentateur 10 peut comprendre un élément sustentateur 11 et un manchon 12 intégré à l'élément sustentateur ou fixé à cet élément sustentateur 11. Le manchon représente l'organe permettant de fixer l'élément sustentateur à un organe de retenue et de mobilité 15 solidarisé au moyeu 5.

Un tel organe de retenue et de mobilité 15 confère à l'ensemble sustentateur 10 une liberté de mouvement en pas selon une première direction de rotation D1, en traînée selon une deuxième direction de rotation D2 et en battement selon une troisième direction de rotation D3.

Cet organe de retenue et de mobilité 15 peut être une butée lamifiée munie d'une armature dite « première armature 16 » fixée au manchon, d'une armature dite « deuxième armature 17 » fixée au moyeu, et un organe lamifié 18 reliant la première armature 16 à la deuxième armature 17.

Par ailleurs, le rotor peut comprendre un ensemble de plateaux cycliques 7 pour contrôler le pas des ensembles sustentateurs 10 par le biais de bielles de pas non représentées.

Cet ensemble de plateaux cycliques peut coopérer avec un compas tournant 8. Ce compas tournant relie un plateau tournant 7' de l'ensemble de plateaux cycliques 7 au mât rotor 6 par le biais d'un entraîneur de compas 9. On se référera à la littérature pour obtenir une description plus détaillée de ces organes.

De plus, le rotor 2 est muni d'un mécanisme 20 de butée pour chaque ensemble sustentateur afin d'au moins limiter le mouvement en battement de cet ensemble sustentateur durant des phases prédéterminées. Notamment, chaque mécanisme est actif pour au moins minimiser ce mouvement en battement en dessous d'une vitesse de rotation seuil du rotor.

Chaque mécanisme 20 de butée comprend une excroissance 25 de butée solidaire d'un ensemble sustentateur 10.

Une telle excroissance peut prendre la forme d'une tige, éventuellement coudée, solidaire du manchon de l'ensemble sustentateur par exemple. Cette tige s'étend alors de l'ensemble sustentateur vers une extrémité libre dénommée « extrémité de butée 30 ».

L'extrémité de butée est munie d'une face interne 31 qui est en regard du système d'entraînement 3 et notamment du mât rotor, et d'une face externe 32 qui est opposée à la face interne 31. La face interne 31 et la face externe 32 peuvent ne pas être parallèles l'une à l'autre.

En outre, le mécanisme 20 de butée est pourvu d'au moins un levier 35 apte à bloquer l'extrémité de butée en battement lorsque le rotor effectue une rotation à une vitesse inférieure à une vitesse seuil.

Ce levier s'étend longitudinalement d'une masselotte 40 vers un crochet 50. Plus précisément, le levier s'étend longitudinalement dans le prolongement de l'extrémité de butée 30, selon un rayon du rotor par exemple.

Par suite, le levier comporte un bras portant une masselotte 40 à une de ses extrémités, et le crochet 50 à son autre extrémité. Entre ces deux extrémités, le levier est traversé par un arbre de pivotement 60 lui conférant un degré de liberté en rotation. Cet arbre de pivotement s'étend transversalement le long d'un axe de symétrie 63, cet axe de symétrie 63 étant contenu dans un plan horizontal de référence 300.

Cet arbre de pivotement est solidaire du système d'entraînement, par exemple via un support 70.

Un tel support peut alors fixé par exemple au moyeu 5, ou au mât rotor 6 ou encore à l'entraîneur de compas 9.

Le levier peut alors pivoter autour de l'arbre de pivotement 60 dans un plan en élévation 500 passant par exemple par l'axe de rotation AX du rotor et l'extrémité de butée 30 du mécanisme 20.

La masselotte est notamment décalée en élévation par rapport au plan horizontal de référence pour générer une rotation du levier selon un sens de rotation représenté par la flèche F1 sous l'effet de la force centrifuge. Ce sens de rotation est dénommé « sens de désengagement » par commodité.

Par ailleurs, le mécanisme comporte un moyen de rappel 45 exerçant un effort sur le levier pour induire une rotation représentée par la flèche F2 selon un sens dénommé « sens d'engagement ». Ce sens d'engagement est opposé au sens de désengagement précédemment décrit.

En outre, le crochet 50 comporte une mâchoire 51 définissant une gorge 52 dans laquelle l'extrémité de butée peut pénétrer.

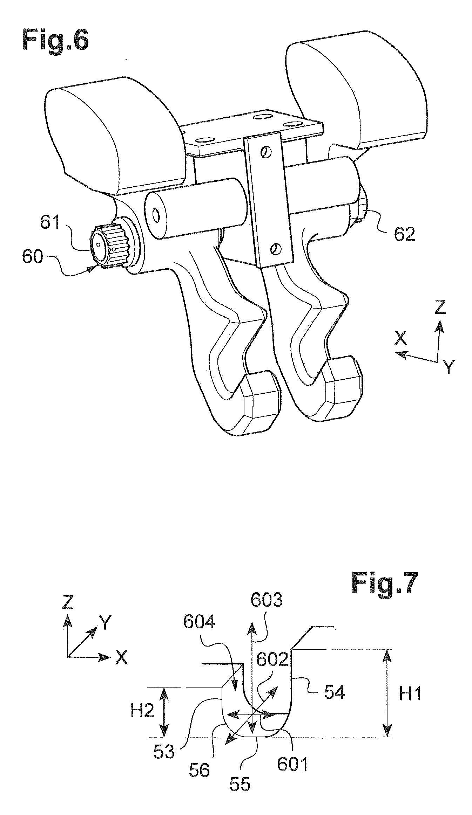

A cet effet et en référence à la figure 7, le crochet 50 présente une périphérie 56 en forme de J délimitant la gorge 52. Cette périphérie 56 est matérialisée par une première paroi en élévation 54 et une deuxième paroi en élévation 53 s'élevant à partir d'une paroi de fond 55. La première paroi en élévation 54 est interposée longitudinalement entre la deuxième paroi en élévation et l'axe de rotation AX. De plus, cette première paroi en élévation 54 s'élève à partir de la paroi de fond 55 sur une première hauteur H1 supérieure à une deuxième hauteur H2 de la deuxième paroi en élévation 53 ce qui confère à la périphérie une forme de J.

Par suite, la gorge 52 est ainsi une gorge qui est :
- non obturée transversalement selon l'axe 602 de manière à déboucher sur l'extérieur du crochet,
- obturée longitudinalement selon l'axe 601 par la première paroi en élévation et la deuxième paroi en élévation
- obturée en élévation selon l'axe 603 uniquement à une de ses extrémités par la paroi de fond, l'autre extrémité présentant ainsi une ouverture 604 en élévation pouvant être traversée par une extrémité de butée.

L'axe 601 représente un axe d'extension longitudinal du levier allant de la masselotte au crochet. L'axe 602 représente un axe transversal du levier dirigé selon l'épaisseur de ce levier. Enfin, l'axe 603 représente un axe en élévation du levier.

Dès lors, cette gorge peut être qualifiée de « borgne » en étant partiellement obturée en élévation.

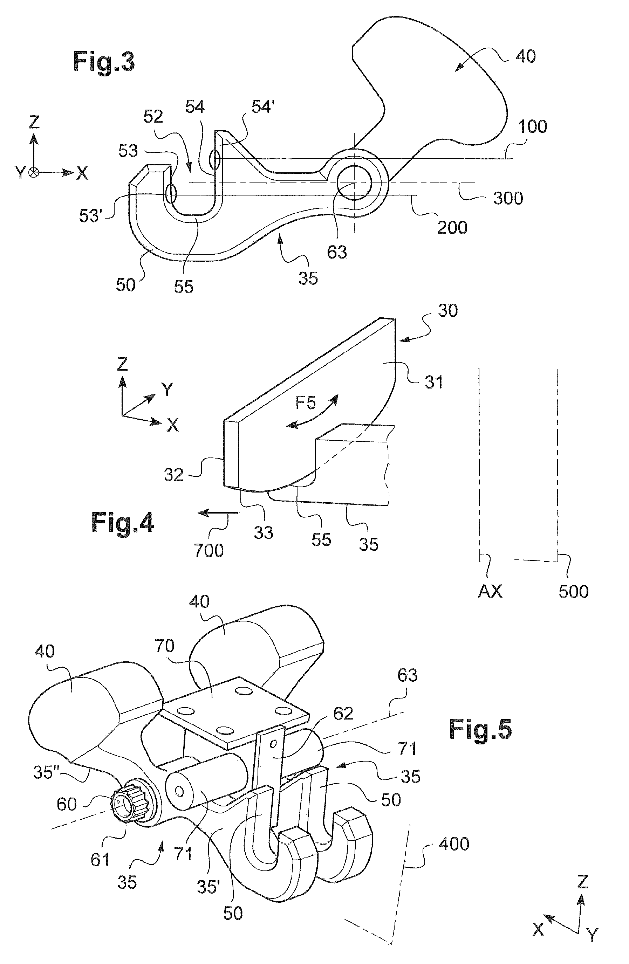

En référence à la figure 3, la première paroi en élévation 54 comporte une zone d'appui supérieur 54' pour bloquer la face interne 31 suite à un battement vers le bas de l'ensemble sustentateur 10.

De même, la deuxième paroi en élévation 53 comprend une zone d'appui inférieur 53' pour bloquer la face externe 32 suite à un battement vers le haut de l'ensemble sustentateur 10.

Par conséquent, la zone d'appui supérieur 54' est présente dans un plan horizontal supérieur 100 qui est disposé au dessus d'un plan horizontal inférieur 200 passant par la zone d'appui inférieur 53' lorsque le levier se trouve dans une position dite d'engagement.

Par exemple, le plan horizontal de référence 300 passant par l'axe de symétrie 63 de l'arbre de pivotement 60 est situé au dessus du plan horizontal inférieur 200 et en dessous du plan horizontal supérieur 100 dans cette position d'engagement.

En référence à la figure 1, lorsque le rotor est entraîné en rotation autour de l'axe de rotation AX à une vitesse inférieure à un seuil, le levier est positionné par le moyen de rappel 45 dans la position d'engagement.

Dans cette position, l'extrémité de butée 30 est agencée dans le gorge 52 du crochet. La face interne 31 de l'extrémité de butée se trouve en vis-à-vis de la première paroi en élévation 54 et la face externe 32 de l'extrémité de butée se trouve en vis-à-vis de la deuxième paroi en élévation 53. En l'absence de battement, un jeu peut séparer la face interne 31 de la première paroi en élévation 54, un autre jeu séparant la face externe 32 de la deuxième paroi en élévation 53.

Si l'ensemble sustentateur tend à battre vers le bas selon la flèche F3, la face interne entre en collision avec la zone d'appui supérieur 54'.

Si l'effort exercé par l'extrémité de butée sur le levier tend à générer une rotation de ce levier, la zone d'appui inférieur 53' entre à son tour en collision avec la face externe de l'extrémité de butée. La rotation du levier est alors stoppée.

Par suite, le mécanisme peut être qualifié de « autobloquant » et garantir l'arrêt du mouvement en battement de l'élément sustentateur vers le bas.

De même, si l'ensemble sustentateur tend à battre vers le haut selon la flèche F4, la face externe 32 entre en collision avec la zone d'appui inférieur 53'.

Si l'effort exercé par l'extrémité de butée sur le levier tend à générer une rotation de ce levier, la zone d'appui supérieur 54' entre à son tour en collision avec la face interne de l'extrémité de butée. La rotation du levier est alors stoppée ce qui permet d'éviter un désengagement de l'extrémité butée hors de la gorge du crochet.

Par conséquent, dans la position d'engagement POS1 de la figure 1, le mécanisme restreint la liberté de mouvement en battement de l'ensemble sustentateur vers le haut et vers le bas aux jeux près.

Pour optimiser le fonctionnement du mécanisme, la face interne 31 de l'extrémité de butée peut ne pas être parallèle à la première paroi en élévation 54 dans la position d'engagement POS1. De même, la face externe 32 peut ne pas être parallèle à la deuxième paroi en élévation 53 dans la position d'engagement POS1.

En outre, la première paroi en élévation 54 n'est favorablement pas parallèle à la deuxième paroi en élévation 53, la première paroi en élévation 54 se rapprochant de la deuxième paroi en élévation 53 en s'éloignant de la paroi de fond 55. La gorge a alors la forme d'un cylindre à base sensiblement trapézoïdale.

Par ailleurs et en référence à la figure 4, l'extrémité de butée 30 comporte une tranche 33 s'étendant longitudinalement selon la flèche 700 de la face interne 31 à la face externe 32. Cette tranche 33 est alors en regard de la paroi de fond 55 dans la position d'engagement POS1 représentée sur la figure 4.

Par suite, cette tranche 33 peut être arquée pour autoriser la modification du pas de l'élément sustentateur 10. Une modification de pas génère une rotation de l'extrémité de butée selon la double flèche F5. La figure 5 explicite bien le fait que la forme arquée de la tranche 33 n'entrave pas ce mouvement rotatif en pas de l'ensemble sustentateur.

Par suite, lorsque le rotor est mis en rotation autour de l'axe de rotation AX à une vitesse inférieure à un seuil, le mécanisme 20 bloque les mouvements de l'ensemble sustentateur correspondant en battement, mais ne bloque pas ces mouvements en pas.

En référence à la figure 2, lorsque le rotor est mis en rotation autour de l'axe de rotation AX à une vitesse supérieure à un seuil, la force centrifuge Fc induit une rotation du levier 35 vers une position de désengagement POS2.

Désormais, l'extrémité de butée 30 n'est plus engagée dans le crochet.

Il est à noter que le support 70 peut comporter une piste de butée amovible 72. Cette piste de butée peut éviter un mouvement de battement indu de grande amplitude vers le bas en vol par interférence avec l'extrémité de butée 30. La piste de butée peut être amovible pour être remplacée en cas d'usure.

Par ailleurs, les figures 5 et 6 présentent un mécanisme de butée muni d'un levier redondé par sécurité.

Ainsi, le mécanisme comporte deux leviers 35 identiques agencés symétriquement de part et d'autre d'un plan d'extension 400 de l'ensemble sustentateur 10 pour remplir la même fonction. Les deux leviers 35 sont mobiles en rotation autour du même arbre de pivotement 60.

Par suite, le mécanisme peut comporter une unique tige traversant une plaque en élévation du support 70, les leviers étant articulés de part et d'autre de ce support autour de cette tige.

Selon une autre variante, cet arbre de pivotement peut comprendre deux tiges coaxiales s'étendant de part et d'autre du support.

Indépendamment du nombre de leviers, le mécanisme peut comporter un tampon 71 par levier 35 pour limiter le pivotement du levier 35 sous l'effet de la force centrifuge. Un même tampon peut coopérer par interférence avec un premier tronçon du levier compris entre l'axe de pivotement et le crochet, mais aussi avec un deuxième tronçon du levier compris entre l'axe de pivotement et la masselotte.

Selon la figure 5, le premier tronçon peut être en butée contre le tampon dans la position d'engagement POS1. A l'inverse, le deuxième tronçon peut être en butée contre le tampon dans la position de désengagement POS2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Rotor (2) de giravion (1) muni une pluralité d'ensembles sustentateurs (10) et d'un système d'entraînement (3) pour entraîner en rotation lesdits ensembles sustentateurs (10) autour d'un axe de rotation (AX), ledit système d'entraînement (3) incluant un moyeu (5) mobile uniquement en rotation autour dudit axe de rotation (AX), chaque ensemble sustentateur (10) ayant un organe de retenue et de mobilité (15) relié au moyeu (5) pour articuler l'ensemble sustentateur (10) au moyeu (5) autour de trois directions de rotation (D1, D2, D3), ledit rotor (2) ayant un mécanisme (20) de butée par ensemble sustentateur (10) pour limiter le mouvement en battement de l'ensemble sustentateur (10) vers le haut et vers le bas dans des conditions prédéterminées, chaque mécanisme (20) de butée d'un ensemble sustentateur (10) comprenant :
- une excroissance (25) de butée solidaire dudit ensemble sustentateur (10), chaque excroissance (25) de butée comprenant une extrémité de butée (30) munie d'une face interne (31) en regard dudit système d'entraînement (3) et d'une face externe (32) opposée à ladite face interne (31),
- au moins un levier (35) pivotant autour d'un arbre de pivotement (60) solidaire du système d'entraînement, chaque levier (35) s'étendant longitudinalement d'une masselotte (40) vers un crochet (50) qui définit une gorge (52) borgne apte à entourer longitudinalement ladite extrémité de butée (30) dans une position d'engagement (POS1) et à libérer cette extrémité de butée (30) dans une position de désengagement (POS2) obtenue sous l'effet de la force centrifuge (FC), ledit crochet (50) étant muni de deux parois en élévation (53, 54) s'élevant à partir d'une paroi de fond (55) en formant une périphérie (56) en forme de J qui délimite ladite gorge (52), une desdites parois en élévation étant dite « première paroi en élévation » et l'autre paroi en élévation étant dit « deuxième paroi en élévation », ladite deuxième paroi en élévation (53) comprenant une zone d'appui inférieur (53') pour bloquer ladite face externe (32) suite à un battement vers le haut de l'ensemble sustentateur (10),
- un moyen de rappel (45) agissant sur ledit levier (35) pour tendre à le positionner dans la position d'engagement (POS1),
ledit rotor de giravion étant **caractérisé en ce que** ladite première paroi en élévation (54) comprend une zone d'appui supérieur (54') pour bloquer ladite face interne (31) suite à un battement vers le bas de l'ensemble sustentateur (10), ladite zone d'appui supérieur (54') étant présente dans un plan horizontal supérieur (100) à l'aplomb d'un plan horizontal inférieur (200) passant par la zone d'appui inférieur (53').

2. Rotor selon la revendication 1,
**caractérisé en ce que** ledit arbre de pivotement (60) s'étend le long d'un axe de symétrie (63) contenu dans un plan horizontal de référence (300) situé au dessus de la zone d'appui inférieur (53') et en dessous de la zone d'appui supérieur (54') lorsque le levier (35) est dans la position d'engagement (POS1).

3. Rotor selon l'une quelconque des revendications 1 à 2,
**caractérisé en ce que** ladite face interne (31) n'est pas parallèle à ladite première paroi en élévation (54) et ladite face externe (32) n'est pas parallèle à ladite deuxième paroi en élévation (53) dans la position d'engagement (POS1).

4. Rotor selon l'une quelconque des revendications 1 à 3,
**caractérisé en ce que** ladite première paroi en élévation (54) n'est pas parallèle à la deuxième paroi en élévation (53), la première paroi en élévation (54) se rapprochant de la deuxième paroi en élévation (53) en s'éloignant de la paroi de fond (55).

5. Rotor selon l'une quelconque des revendications 1 à 4,
**caractérisé en ce que** ledit arbre de pivotement (60) s'étend le long d'un axe de symétrie (63) contenu dans un plan horizontal de référence (300), ladite masselotte (40) étant décalée par rapport au plan horizontal de référence (300).

6. Rotor selon l'une quelconque des revendications 1 à 5,
**caractérisé en ce qu'**au moins un mécanisme (20) comporte un levier (35) redondé soit deux leviers (35) identiques agencés symétriquement de part et d'autre d'un plan d'extension (400) de l'ensemble sustentateur (10), les deux leviers (35) étant mobiles en rotation autour du même arbre de pivotement (60).

7. Rotor selon l'une quelconque des revendications 1 à 6,
**caractérisé en ce qu'**au moins un mécanisme (20) comporte un support (70) portant ledit arbre de pivotement (60), ledit support (70) étant fixé au système d'entraînement.

8. Rotor selon la revendication 7,
**caractérisé en ce que** ledit support (70) est muni d'un tampon (71) par levier (35) pour limiter le pivotement du levier (35).

9. Rotor selon l'une quelconque des revendications 7 à 8,
**caractérisé en ce que** ledit support (70) est muni d'une piste de butée (72) en regard de ladite face interne (31) pour représenter une butée basse franche active en vol bloquant ladite face interne (31) suite à un battement vers le bas atteignant une amplitude prédéterminée.

10. Rotor selon l'une quelconque des revendications 1 à 9,
**caractérisé en ce que** ladite extrémité de butée (30) comporte une tranche (33) s'étendant entre la face interne (31) et la face externe (32) et étant en regard de la paroi de fond (55) dans la position d'engagement (POS1), ladite tranche (33) étant arquée pour autoriser la modification du pas de l'élément sustentateur (10).

11. Rotor selon l'une quelconque des revendications 1 à 10,
**caractérisé en ce que** ledit système d'entraînement (3) comportant au moins des organes présents dans une liste incluant ledit moyeu ainsi qu'un mât rotor (6) solidaire dudit moyeu (5) et un élément d'un compas (8), au moins un levier (35) est attaché à l'un desdits organes de ladite liste.

12. Giravion (1),
**caractérisé en ce que** ce giravion (1) comporte un rotor (2) selon l'une quelconque des revendications 1 à 11.

## Patentansprüche

1. Rotor (2) eines Drehflügelflugzeugs (1) mit einer Mehrzahl von Auftrieb erzeugenden Gruppen (10) und einem Antriebssystem (3) für den Drehantrieb der Auftrieb erzeugenden Gruppen (10) um eine Rotationsachse (AX), wobei das Antriebssystem (3) eine Nabe (5) umfasst, die nur um die Rotationsachse (AX) drehbeweglich ist, wobei jede Auftrieb erzeugende Gruppe (10) ein Halte- und Beweglichkeitselement (15) aufweist, das mit der Nabe (5) verbunden ist, um die Auftrieb erzeugende Gruppe (10) an der Nabe (5) um drei Rotationsrichtungen (D1, D2, D3) beweglich anzulenken, wobei der Rotor (2) einen Anschlagsmechanismus (20) pro Auftrieb erzeugender Gruppe (10) aufweist, um die Schlagbewegung der Auftrieb erzeugenden Gruppe (10) nach oben und nach unten unter vorbestimmten Umständen zu begrenzen, wobei jeder Anschlagsmechanismus (20) einer Auftrieb erzeugenden Gruppe (10) aufweist:
- eine Anschlagsausbuchtung (25), die mit der Auftrieb erzeugenden Gruppe (10) fest verbunden ist, wobei jede Anschlagsausbuchtung (25) ein Anschlagsende (30) aufweist, das mit einer inneren Fläche (31) gegenüber dem Antriebssystem (3) und einer äußeren Fläche (32) gegenüber der inneren Fläche (31) versehen ist,
- mindestens einen Hebel (35), der um eine Schwenkachse (30) pendelt, die mit dem Antriebssystem fest verbunden ist, wobei jeder Hebel (35) sich in Längsrichtung von einem Ausgleichsgewicht (40) zu einem Haken (50) erstreckt, der eine Blindkehle (52) definiert, die in Längsrichtung das Anschlagsende (30) in einer Eingriffsstellung (POS1) umgreifen kann und dieses Anschlagsende (30) in einer Lösestellung (POS2) freigeben kann, die unter Einwirkung der Zentrifugalkraft (FC) erreicht wird, wobei der Haken (50) mit zwei nach oben gerichteten Wänden (53, 54) versehen ist, die sich ausgehend von einer Bodenwand (55) nach oben erstrecken unter Bildung eines J-förmigen Umfangs (56), der die Kehle (52) begrenzt, wobei eine der nach oben gerichteten Wände "erste nach oben gerichtete Wand" und die andere nach oben gerichtete Wand "zweite nach oben gerichtete Wand" genannt wird, wobei die zweite nach oben gerichtete Wand (53) einen unteren Abstützbereich (53') aufweist, um die Außenfläche (32) nach einer Schlagbewegung der Auftrieb erzeugenden Gruppe (10) nach oben zu blockieren,
- ein Rückholmittel (45), das auf den Hebel (35) einwirkt, mit dem Ziel, diesen in der Eingriffsstellung (POS1) zu positionieren,
wobei der Rotor des Drehflügelflugzeugs **dadurch gekennzeichnet ist, dass** die erste nach oben gerichtete Wand (54) einen oberen Abstützbereich (54') aufweist, um die Innenseite (31) nach einer Schlagbewegung der Auftrieb erzeugenden Gruppe (10) nach unten zu blockieren, wobei der obere Abstützbereich (54') in einer oberen horizontalen Ebene (100) senkrecht zu einer unteren horizontalen Ebene (200), die durch den unteren Abstützbereich (53') verläuft, liegt.

2. Rotor nach Anspruch 1,
**dadurch gekennzeichnet, dass** die Schwenkachse (60) sich entlang einer Symmetrieachse (63) erstreckt, die in einer horizontalen Bezugsebene (300) liegt, die oberhalb des unteren Abstützbereichs (53') und unterhalb des oberen Abstützbereichs (54') gelegen ist, wenn der Hebel (35) sich in der Eingriffsstellung (POS1) befindet.

3. Rotor nach einem der Ansprüche 1 bis 2,
**dadurch gekennzeichnet, dass** die innere Fläche (31) nicht parallel zu der in die Höhe gerichteten Wand (54) ist, und die Außenfläche (32) nicht parallel zu der zweiten nach oben gerichteten Wand (53) in der Eingriffsstellung (POS1) verläuft.

4. Rotor nach einem der Ansprüche 1 bis 3,
**dadurch gekennzeichnet, dass** die erste nach oben gerichtete Wand (54) nicht parallel zu der zweiten nach oben gerichteten Wand (53) ist, wobei die erste nach oben gerichtete Wand (54) sich der zweiten nach oben gerichteten Wand (53) nähert, indem sie sich von der Bodenwand (55) entfernt.

5. Rotor nach einem der Ansprüche 1 bis 4,
**dadurch gekennzeichnet, dass** die Schwenkachse (60) sich entlang einer Symmetrieachse (63) erstreckt, die in einer horizontalen Bezugsebene (300) liegt, wobei das Ausgleichsgewicht (40) bezüglich der horizontalen Bezugsebene (300) versetzt ist.

6. Rotor nach einem der Ansprüche 1 bis 5,
**dadurch gekennzeichnet, dass** mindestens ein Mechanismus (20) einen redundant ausgelegten Hebel (35), wie zwei identische Hebel (35), aufweist, die symmetrisch zu beiden Seiten einer Erstreckungsebene (400) der Auftrieb erzeugenden Gruppe (10) angeordnet sind, wobei die beiden Hebel (35) drehbeweglich um dieselbe Schwenkachse (60) sind.

7. Rotor nach einem der Ansprüche 1 bis 6,
**dadurch gekennzeichnet, dass** mindestens ein Mechanismus (20) einen Träger (70) aufweist, der die Schwenkachse (60) trägt, wobei der Träger (70) am Antriebssystem befestigt ist.

8. Rotor nach Anspruch 7,
**dadurch gekennzeichnet, dass** der Träger (70) mit einem Puffer (71) pro Hebel (35) versehen ist, um das Verschwenken des Hebels (35) zu begrenzen.

9. Rotor nach einem der Ansprüche 7 bis 8,
**dadurch gekennzeichnet, dass** der Träger (70) mit einer Anschlagsspur (72) gegenüber der Innenseite (31) versehen ist, um einen unteren freien Anschlag zu bilden, der im Flug aktiv ist und die innere Seite (31) nach einer Schlagbewegung nach unten begrenzt, wenn diese eine vorbestimmte Amplitude erreicht.

10. Rotor nach einem der Ansprüche 1 bis 9,
**dadurch gekennzeichnet, dass** das Anschlagsende (30) einen Abschnitt (33) aufweist, der sich zwischen der Innenseite (31) und der Außenseite (32) erstreckt und sich in der Eingriffsstellung (POS1) gegenüber der Bodenwand (55) befindet, wobei der Abschnitt (33) gebogen ist, um die Änderung des Neigungswinkels des Auftrieb erzeugenden Elements (10) zu erlauben.

11. Rotor nach einem der Ansprüche 1 bis 10,
**dadurch gekennzeichnet, dass** das Antriebssystem (3) mindestens Elemente aufweist, die in einer Liste enthalten sind, die die Nabe sowie eine mit der Nabe (5) fest verbundene Rotorwelle (6) und ein Zirkelelement (8) umfasst, wobei mindestens ein Hebel (35) mit einem der Elemente der Liste verbunden ist.

12. Drehflügelflugzeug (1),
**dadurch gekennzeichnet, dass** das Drehflügelflugzeug (1) einen Rotor (2) nach einem der Ansprüche 1 bis 11 aufweist.

## Claims

1. A rotor (2) of a rotorcraft (1) provided with a plurality of lift assemblies (10) and with a drive system (3) for driving said lift assemblies (10) in rotation about an axis of rotation (AX), said drive system (3) including a hub (5) which is mobile solely in rotation about said axis of rotation (AX), each lift assembly (10) having a retention and mobility member (15) connected to the hub (5) in order to articulate the lift assembly (10) to the hub (5) about three directions of rotation (D1, D2, D3), said rotor (2) having one abutment mechanism (20) per lift assembly (10) for limiting the flapping movement of the lift assembly (10) upwards and downwards under predetermined conditions, each abutment mechanism (20) of a lift assembly (10) comprising:
- an abutment projection (25) integral with said lift assembly (10), each abutment projection (25) comprising an abutment end (30) provided with an inner face (31) facing said drive system (3) and with an outer face (32) opposite said inner face (31),
- at least one lever (35) pivoting about a pivot shaft (60) integral with the drive system, each lever (35) extending longitudinally from a fly weight (40) to a hook (50) which defines a blind groove (52) suitable for longitudinally surrounding said abutment end (30) in an engagement position (POS1) and for releasing this abutment end (30) in a disengagement position (POS2) obtained under the effect of centrifugal force (FC), said hook (50) being provided with two walls in elevation (53, 54) rising from a bottom wall (55) and forming a J-shaped periphery (56) which defines said groove (52), one of said walls in elevation being referred to as "first wall in elevation" and the other wall in elevation being referred to as "second wall in elevation", said second wall in elevation (53) comprising a lower bearing zone (53') for blocking said outer face (32) following upward flapping of the lift assembly (10),
- a return means (45) acting on said lever (35) for tending to position it in the engagement position (POS1),
said rotorcraft rotor being **characterised in that** said first wall in elevation (54) comprises an upper bearing zone (54') for blocking said inner face (31) following downward flapping of the lift assembly (10), said upper bearing zone (54') being present in an upper horizontal plane (100) directly above a lower horizontal plane (200) passing through the lower bearing zone (53').

2. A rotor according to Claim 1,
**characterised in that** said pivot shaft (60) extends along an axis of symmetry (63) contained in a horizontal reference plane (300) located above the lower bearing zone (53') and below the upper bearing zone (54') when the lever (35) is in the engagement position (POS1).

3. A rotor according to any one of Claims 1 to 2,
**characterised in that** said inner face (31) is not parallel to said first wall in elevation (54), and said outer face (32) is not parallel to said second wall in elevation (53) in the engagement position (POS1).

4. A rotor according to any one of Claims 1 to 3,
**characterised in that** said first wall in elevation (54) is not parallel to the second wall in elevation (53), the first wall in elevation (54) coming closer to the second wall in elevation (53) on moving away from the bottom wall (55).

5. A rotor according to any one of Claims 1 to 4,
**characterised in that** said pivot shaft (60) extends along an axis of symmetry (63) contained in a horizontal reference plane (300), said fly weight (40) being offset relative to the horizontal reference plane (300).

6. A rotor according to any one of Claims 1 to 5,
**characterised in that** at least one mechanism (20) comprises a redundant lever (35) or two identical levers (35) arranged symmetrically on either side of a plane of extension (400) of the lift assembly (10), the two levers (35) being mobile in rotation about the same pivot shaft (60).

7. A rotor according to any one of Claims 1 to 6,
**characterised in that** at least one mechanism (20) comprises a support (70) bearing said pivot shaft (60), said support (70) being fastened to the drive system.

8. A rotor according to Claim 7,
**characterised in that** said support (70) is provided with one bumper (71) per lever (35) for limiting the pivoting of the lever (35).

9. A rotor according to any one of Claims 7 to 8,
**characterised in that** said support (70) is provided with an abutment track (72) facing said inner face (31) to represent a free lower abutment which is active in flight blocking said inner face (31) following downward flapping which reaches a predetermined amplitude.

10. A rotor according to any one of Claims 1 to 9,
**characterised in that** said abutment end (30) comprises an edge (33) extending between the inner face (31) and the outer face (32) and facing the bottom wall (55) in the engagement position (POS1), said edge (33) being arcuate in order to allow the pitch of the lift element (10) to be altered.

11. A rotor according to any one of Claims 1 to 10,
**characterised in that** said drive system (3) comprising at least members present in a list including said hub and also a rotor mast (6) integral with said hub (5) and a scissors element (8), at least one lever (35) is attached to one of said members of said list.

12. A rotorcraft (1),
**characterised in that** this rotorcraft (1) comprises a rotor (2) according to any one of Claims 1 to 11.
